# EUROPEAN PATENT APPLICATION

(11) **EP 2 887 687 A1**
(43) Date of publication of application: **24.06.2015**
(21) Application number: 13306852.8
(22) Date of filing: 23.12.2013
(51) Int. Cl.: H04N 21/63, H04N 21/43, H04N 13/00

(54) **Distribution of audiovisual content for display devices**

(71) Applicant: Thomson Licensing, 92130 Issy-les-Moulineaux (FR)
(72) Inventor: Thiebaud, Sylvain, 35576 Cesson-Sévigné (FR); Laurent, Anthony, 35576 Cesson-Sévigné (FR); Thebault, Cédric, 35576 Cesson-Sévigné (FR)
(74) Representative: Huchet, Anne

(57) **Abstract**

The present invention provides a method and device for optimizing a distribution of audiovisual content for display devices of different types, such as multi-view autostereoscopic 3D displays, single view 3D displays, and 2D displays. A peer-to-peer network is used for smart distribution of so-called monoscopic views of content, so that each of the heterogeneous set of display devices can be quickly served with the content views that it needs.

## Description

### 1. Field of invention.

The present invention relates to the field of distribution of audiovisual content for display devices, and in particular of distribution of audio/video content in a heterogeneous network environment where different types of display devices, such as autostereoscopic 3D, non-autostereoscopic 3D and 2D display devices co-exist.

### 2. Technical background.

Relatively recent technology breakthroughs have made 3 dimensional (3D) video display devices available for mass production. During the late 2000s, with the introduction of 3D cinema and affordable mass-market 3D capable displays, it was expected that this new technology would overwhelm the electronic consumer device market. However, sales figures of mass-market 3D display devices did not live up to expectations. Several reasons explain this relative failure of commercial success of these devices. These reasons have a technological cause, but not only. As this period saw also the mass introduction of HD capable displays, consumers had become accustomed to a high quality picture. The HD picture was of a far better quality than anything they had seen before. Video content with HD picture quality was widely available, and was distributed per broadcast, per DVD or per online streaming. Bluray DVDs even offered a still better picture quality. The visualization of 3D images however required the wearing of specific glasses. Concessions were made with regard to the picture quality of the 3D image and resulted in lower brightness and resolution than that of the 2D HD image. 3D capable screens were still more expensive than 2D HD displays which gave the user a very good picture quality. 3D content was not widely available and relatively expensive. These and other drawbacks not mentioned resulted in the disappointing sales figures for 3D capable displays.

However, a promising new technology has emerged that removes the requirement to wear specific glasses. This technology is referred to as autostereoscopic display. Though this new technology resolves some of the problems that have prevented a mass market introduction of 3D capable displays, other technical difficulties remain. One of the main remaining challenges is the distribution of 3D content to the consumer. Without a good, cost effective distribution of 3D content, even this new display technology will fail to be accepted by the mass consumer market.

As has been mentioned, the additional bandwidth requirement for transmitting 3D content is one of the problems that remain to stand in the way of a large-scale deployment of transmission of content destined for 3D displays.

It would therefore be desirable to propose a good, cost effective distribution of 3D content that supports the new 3D display technology. As many consumers are nowadays equipped with 3D capable HD displays, 2D HD or at least 2D SD displays, it would be desirable for the new distribution technology to be compatible with the existing display devices, while not impacting bandwidth used for transmission of content for 2D display devices.

### 3. Summary of the invention.

The purpose of this invention is to solve the above problem by providing a method and device for distributing of audio/video content.

To this end, the invention comprises a method for distribution of audiovisual content to video display devices connected in a network, the network comprises a peer-to-peer network wherein the video display devices are interconnected as peers, the method being implemented by a coordinating peer, and comprising: receiving a request from a first peer for video content X; determining a number of required consecutive monoscopic views for the first peer according to a display type of the first peer; selecting at least one monoscopic view of monoscopic views for video content X not available from second peers in a peer cluster, the peer cluster comprising second peers that are within a predetermined distance from the first peer, and which at least one monoscopic view contributes to completing a set of monoscopic views for video content X for a peer in the peer cluster requiring the most monoscopic views of the peers in the peer cluster; and transmitting, to the first peer, of a list comprising at least one identifier of at least one second peer in the peer cluster for providing at least one of the required number of consecutive monoscopic views to the first peer, wherein at least one monoscopic view of the required number of consecutive monoscopic views is the selected at least one monoscopic view.

According to a variant embodiment of the method of the invention, during a modification of distribution of monoscopic views for video content X in the peer cluster, the peers in the peer cluster that are concerned by the modification, switch from one monoscopic view to another during a scene cut in the video content X.

According to a variant embodiment of the method of the invention, the modification of distribution is based on popularity of video content among users of the peers in the peer cluster.

According to a variant embodiment of the method of the invention, the network comprises a non-peer-to-peer video broadcast distribution network, and the peers inform the coordinating peer of the content and monoscopic views they receive via the non-peer-to-peer video broadcast distribution network.

According to a variant embodiment of the method of the invention, a monoscopic view for a content is associated to a video resolution, and the selected at least one monoscopic view has a video resolution that is equal or higher than a display resolution for monoscopic views required by the first peer and that is equal or higher than a display resolution for monoscopic views required by the peer in the peer cluster requiring the most monoscopic views of the peers in the peer cluster.

According to a variant embodiment of the method of the invention, if there are multiple monoscopic views with a video resolution that is both equal or higher than a display resolution for monoscopic views required by the first peer and that is equal or higher than a display resolution for monoscopic views required by the peer in the peer cluster requiring the most monoscopic views of the peers in the peer cluster, the monoscopic view with the least highest video resolution is selected in the selecting step.

According to a variant embodiment of the method of the invention, the selecting step comprises, for each of the monoscopic views for video content X not available from the second peers in the peer cluster and that contributes to completing a set of monoscopic views for video content X for a peer in the peer cluster requiring the most monoscopic views of the peers in the peer cluster, calculating of the network cost for the peers in the peer cluster to obtain the other monoscopic views for video content X not available from the second peers in the peer cluster and that contribute to completing a set of monoscopic views for video content X for a peer in the peer cluster requiring the most monoscopic views of the peers in the peer cluster.

According to a variant embodiment of the method of the invention, the display type is one of: a single view 3D display requiring two consecutive monoscopic views; a multi-view autostereoscopic 3D display requiring more than two consecutive monoscopic views; and a 2D display requiring a single monoscopic view.

The invention also comprises a device for distribution of video content to video display devices connected in a network, the network comprises a peer-to-peer network wherein the video display devices are interconnected as peers, the device comprising a network interface and a processing unit for: receiving a request from a first peer for video content X; determining a number of required consecutive monoscopic views for the first peer according to a display type of the first peer; selecting at least one monoscopic view of monoscopic views for video content X not available from second peers in a peer cluster, the peer cluster comprising second peers that are within a predetermined distance from the first peer, and which at least one monoscopic view contributes to completing a set of monoscopic views for video content X for a peer in the peer cluster requiring the most monoscopic views of the peers in the peer cluster; transmitting, to the first peer, of a list comprising at least one identifier of at least one second peer in the peer cluster for providing at least one of the required number of consecutive monoscopic views to the first peer, wherein at least one monoscopic view of the required number of consecutive monoscopic views is the selected at least one monoscopic view.

According to a variant embodiment of the device of the invention, the device further comprises a network interface and a processing unit for modifying a distribution of monoscopic views for a video content in a peer cluster, whereby during a modification of distribution of monoscopic views for video content X in the peer cluster, the peers in the peer cluster that are concerned by the modification, switch from one monoscopic view to another during a scene cut in the video content X.

According to a variant embodiment of the device of the invention, the device further comprises a processing unit for determining a popularity of video content among users of peers, and for basing the modifying of a distribution on popularity of video content among users of the peers in the peer cluster.

According to a variant embodiment of the device of the invention, the device comprises a network interface and a processing unit for receiving of information from peers that are also connected in a non-peer-to-peer video broadcast distribution network, the peers informing the coordinating peer of the content and monoscopic views they receive via the non-peer-to-peer video broadcast distribution network.

Advantages discussed in this document and other advantages not mentioned in this document will become clear upon the reading of the detailed description of the invention that follows.

In the following, the term 'audio/video' is used, meaning audio alone, video alone, or a combination of audio and video.

### 4. List of figures.

More advantages of the invention will appear through the description of particular, non-restricting embodiments of the invention. The embodiments will be described with reference to the following figures:
**Figure 1** shows the principle of prior art multi-view autostereoscopic 3D display technology.
**Figure 2** is a further illustration of the principles of operation of a multi-view autostereoscopic 3D display according to prior art.
**Figure 3** is an example of a video content distribution network that is compatible with the invention.
**Figure 4** is a diagram illustrating an exchange of messages in the peer-to-peer network with a coordinating function implemented by a centralized coordinating peer.
**Figure 5** illustrates the principle of well-balancedness according to the invention.
**Figure 6** is a device implementing the method of the invention.
**Figure 7** is a flow chart of a particular embodiment of the method of the invention.

### 5. Detailed description of the invention.

There are different ways to achieve a 3D effect. Anaglyph systems were one of the first on market and use two different colors of light and special tinted glasses that block one set of images to an eye while allowing the other set to pass through. Inevitably, the color rendering of the image is distorted. Polarized, "passive" systems have special glasses that only let light aligned a particular way to pass through to reach the eyes. Active-shutter glasses have LCD shutters that open and close in a pattern synchronized with the display. Each eye only sees one set of images, resulting in a 3D image. With the second and the third technique, color rendering is good, but it suffers from serious brightness loss. Additionally, all of these three techniques are incompatible between them and a viewer needs to wear specifically adapted glasses. However, none of these technologies suffer from a particularly limited viewing angle.

An auto-stereoscopic 3D display is a display providing a 3D effect without glasses. The simplest auto-stereoscopic 3D display is based on parallax barriers, applied for example in the Nintendo 3DS. The 3DS screen has a special layer on top of it that helps direct light in a particular way. The layer is a second liquid crystal display (LCD) in which the crystals can create barriers that block or not the light. When the viewer is at the right distance and at the right viewing angle, he will receive two different images, each destined for one eye, resulting in the 3D effect. However, the disadvantage of this simple system is that there is only one viewing angle in which the 3D view is correctly rendered, and as the parallax barriers block 50% of the light for each eye, some brightness is lost. Although the technology is convenient for a hand-held small screen device destined for one user, it is not appropriate for a living-room size flat screen television for providing a 3D viewing experience to several members of a family. Therefore, multi-view autostereoscopic 3D displays have been developed that allow rendering a correct 3D view from different viewing angles.

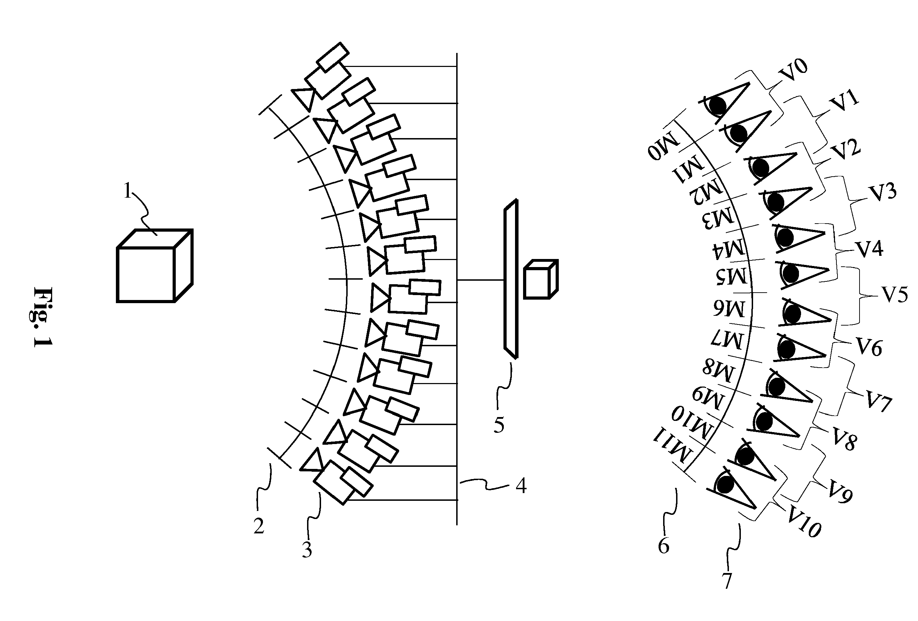

**Figure 1** shows the principle of prior art multi-view autostereoscopic 3D display technology. A camera array 3 captures the image of an object 1 under different angles. The camera array comprises twelve cameras that capture twelve consecutive monoscopic views M0-M11 of object 1, each of the consecutive monoscopic view corresponding to a different viewing angle, as each of the twelve cameras captures an image of object 1 from a different angular slot 2. The images from the cameras are transmitted via a transmitting means 4 to a multi-view autostereoscopic 3D display 5, which displays the object 1. Display 5 displays the twelve monoscopic views captured by cameras 3 and disperse these according to different angles such that they fall within viewing slots 6, thereby creating eleven stereoscopic views V0 to V10. Each view V0 to V10 provides a left eye view and a right eye view, and thus provides a 3D image to the viewer based on stereo parallax. The eyes 7 of a viewer observes the eleven stereoscopic views as he moves his head from left to right and vice versa in front of display 5. This is called movement parallax. According to the example, movement parallax is provided horizontally only. Of course, movement parallax can also be provided vertically, but it is not common to provide vertical movement parallax because this seriously complicates the underlying technology and its interest seems limited. For ease of understanding, the number of stereoscopic views shown in the illustration of figure 1 is limited to eleven. Prior art multi-view autostereoscopic 3D displays can however provide more or less than eleven views.

With regard to the single-view (stereo 3D) autostereoscopic display, the multi-view autostereoscopic display must thus be provided with much more information. This is because that for the multi-view autostereoscopic display, one cannot simply duplicate a same autostereoscopic view to offer the multi-view, as this would result in incorrect stereoscopic views at some viewing angles. For example, if V0 were a base stereoscopic view and V2, V4, V6, V8 and V10 copies of that same stereoscopic view, views V1, V3, V5, V7 and V9 would give inversed left eye-right eye views. To avoid this effect, each monoscopic view destined for the multi-view display differs from the other monoscopic views by the viewing angle, they are therefore said to be consecutive. For a network bandwidth point of view, one can see that it is more efficient to transmit monoscopic views to the multi-view autostereoscopic 3D display than to transmit stereoscopic views since information would be unnecessarily duplicated; e.g. when V0 and V1 are transmitted, the common monoscopic view M1 is duplicated in the transmitted information.

The skilled person in the art will appreciate that other implementations of prior art multi-view autostereoscopic 3D display technology exist, such as using less than twelve cameras, and computing of intermediate 3D views by signal processing, also referred to as 3D view interpolation.

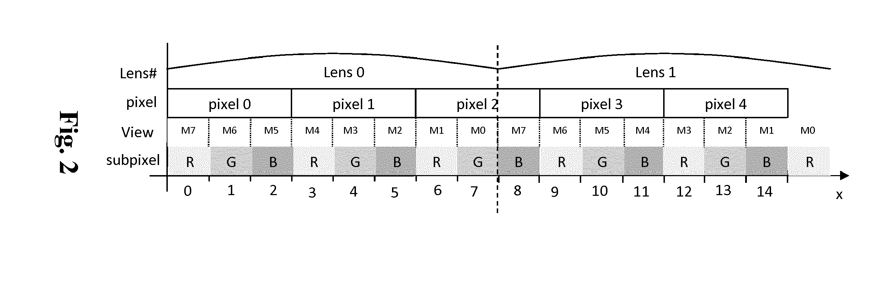

**Figure 2** is a further illustration of the principles of operation of a multi-view autostereoscopic 3D display according to prior art, such as display 5 of figure 1. The display of figure 2 provides seven stereoscopic views at different viewing angles. An array of micro lenses (Lens 0, Lens 1,) is used to disperse the light emitted by the pixels of the display under eight different viewing angles. The micro lens array is placed in front of a particular RGB (Red, Green, and Blue) pixel matrix (e.g. Pixel 0, Pixel 1, Pixel 2, and Pixel 3). Each pixel comprises a set of R, G, and B sub pixels (e.g. 0,1,2 for pixel 0; 3, 4, 5 for pixel 2, etc). The three colors of light emitted by each pixel (e.g. pixel 0, 1, 2, 3 or 4) is dispersed in different directions, depending on the position of the corresponding sub-pixel relatively to the micro lens positioned in front of the pixel. When a viewer is placed in front of such a display device, he will receive, at a certain distance and angle, on each eye light from different R, G and B sub pixels. For example, in the most left viewing angle (from the display point of view), a viewer's left eye will receive RGB light for a monoscopic view M7 emitted by sub pixel 0 (R), 8 (B) and a third sub pixel (not shown in the figure) 8+8=16 (G). The viewer's right eye will receive RGB light for a monoscopic view M6 emitted by sub pixel 1 (green component) sub pixel 9 (red component) and sub pixel 9+8=17 (blue component, sub pixel not shown in the figure). Monoscopic views M7 and M6 together form a stereoscopic view V6 (if the first position where the 3D effect is perceived is V0, the last one is V6. The next one, V7, is in inverse stereo). In the most right viewing angle, sub pixels 6, 14 and 22 provide the left eye with RGB light for a monoscopic view M1, while sub pixels 7, 15 and 23 provide the right eye with RGB light for a monoscopic view M0. Monoscopic views M1 and M0 form another stereoscopic view V0. Thus, because the RGB sub pixels are duplicated several times and with the particular arrangement of the micro lenses in front of the RGB sub pixel sets, the display is capable of providing multiple stereoscopic views for different viewing angles at the same time. In this example, the micro lens width is a multiple of the sub-pixel width. Other arrangements exist, in which case the shuffling of the views is different.

Thus, the image information to be provided to a multi-view stereoscopic 3D display depends on the number of stereoscopic views displayed by the device, but also on the micro lens structure. In such a heterogeneous environment, it can occur that different display devices generating the same number of stereoscopic views must be addressed differently. As the number of views that must be transmitted to a multi-view stereoscopic 3D display multiplies network bandwidth needed to transport video content for these types of displays when compared to single view autostereoscopic 3D displays, non-auto stereoscopic 3D displays or 2D displays, it is desirable to compress the video content. However, compression is difficult when different types of multi-view stereoscopic 3D displays are to be addressed since compression often results in loss of information that might not be needed for one type of display but that is needed by another type of display. Currently, there is no standard or normalization for transmission of video content for multi-view autostereoscopic 3D displays. Prior art solutions propose to transmit a video view, an occlusion map and a disparity map as proposed by Philips in their LDV (Layered Depth Video) format; or propose to transmit two or more video views and disparity maps. According to the LDV format, two monoscopic views, corresponding a most left and a most right monoscopic view are then transmitted together with a disparity map (or 'depth' map). At the receiver side, the intermediate stereoscopic views are generated through interpolation. However, important computing capacity is required in the receiver for calculation of the intermediate stereoscopic views in order to reach a good display quality level. Further this solution is not compatible with stereo 3D displays. This is because to have enough depth perceived with 2 consecutive interpolated video views on multi-view auto-stereoscopic displays, the depth between the two transmitted monoscopic views should be too high, which would result in an incorrect, distorted 3D view on a stereo 3D display. To provide a correct 3D view, it would require adding interpolating means to the non-autostereoscopic 3D display device in order to extract an intermediate stereoscopic view with a correct depth from the received video information.

The invention therefore proposes a particular efficient video content transmission method and device that solves the problems encountered with prior art solutions. The method and device of the invention have the advantages of sparse bandwidth use for transmission of 3D content and provides compatibility between the different types of multi-view autostereoscopic 3D displays, non-autostereoscopic 3D displays, and 2D (also referred to as "monoscopic") displays.

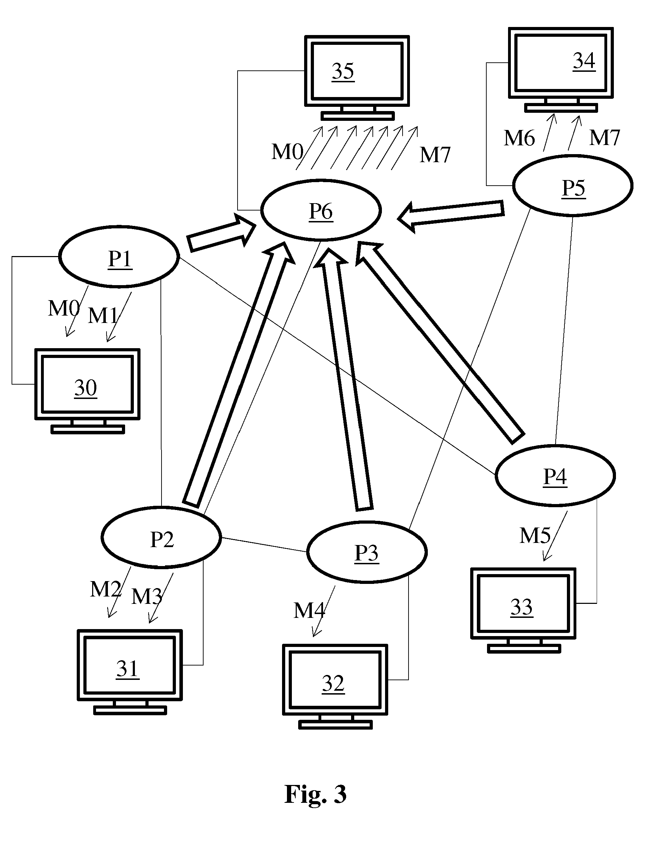

**Figure 3** is an example of a video content distribution network that is compatible with the invention. It is a peer-to-peer network, where content is distributed in file form or in the form of file chunks, either for download or for streaming. The peer-to-peer network can handle the limited bandwidth requirement for distribution of 3D content without impacting the bandwidth for normal broadcast distribution. As such, and according to a particular hybrid embodiment, the peer-to-peer network for the distribution of 3D content is advantageously combined with a prior art broadcast distribution network for the distribution of 2D content. In the peer-to-peer network, each peer can act either as a content client or a content server for other peers. This means that a peer receiving data as a client can re-distribute it to other peers as a server. The invention takes advantage of the heterogeneity of display types connected in the peer-to-peer network and can distribute in an efficient way content to the different types of displays: multi-view autostereoscopic 3D, non-autostereoscopic 3D, and 2D displays. The above discussed advantages and other advantages not yet mentioned will become clear in the following. The figure 3 illustrates six peers P1 to P6 that can be said to form a peer cluster. The peers in the peer cluster are interconnected, which is illustrated by the lines between the peers. In a peer to peer network according to the invention, many peer clusters may exist. A peer cluster may be defined as comprising peers that are within a predefined distance from each other. Each peer in the peer-to-peer network is directly or indirectly connected to a display device. The skilled in the art will appreciate that a display device can also be a peer itself. Tangible examples of peers are: a Set Top Box, a gateway, a digital television, a PC, a tablet, and a mobile phone. Peer P1 respectively peer P2, respectively peer P5 is connected to a non-autostereoscopic 3D display 30 respectively 31, respectively 34. Each of the displays 30, 31 and 34 requires a pair of monoscopic views M forming a single stereoscopic view V for a content X. Peers P3 and P4 are connected to 2D displays 32 respectively 33 that each require a single monoscopic view M of the content X. Peer P6 is connected to a multi view autostereoscopic 3D display 35 offering seven different stereoscopic views under different viewing angles and requires as an input eight consecutive monoscopic views M of content X, for the specific viewing angles. When the different views are distributed as depicted, peer P6 can obtain its required eight consecutive monoscopic views M for different viewing angles for content X from the peers P1-P5 in its neighborhood, i.e. two monoscopic views (V0,V1) from P1, two other monoscopic views (V2,V3) from P2, two monoscopic views (V6, V7) from P5, and (V4, V5) from peers P3 and P4.

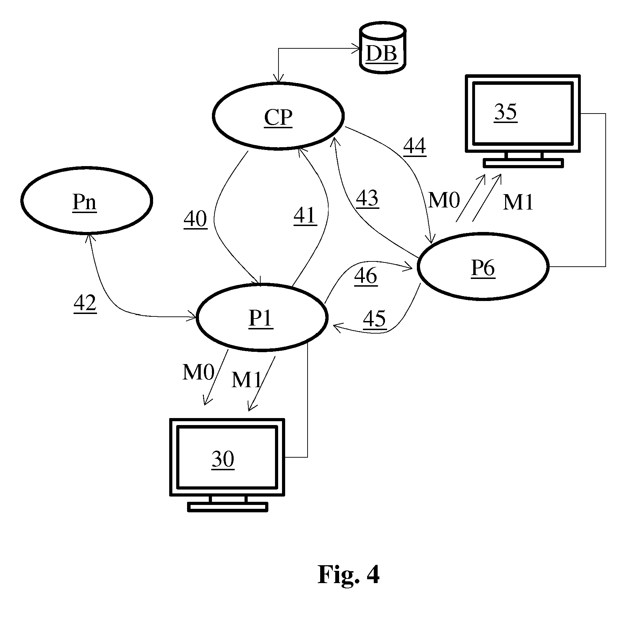

It is thus important that the views for a given content X are distributed correctly over the peers in order to be able to serve each peer with the content that it needs. Though the peers P1, P2 and P5 would be satisfied with any pair of monoscopic views of content X as long as they form a stereoscopic view, and peers P3 and P4 would be satisfied with any monoscopic view of content X, it can be observed that there is a peer P6 that is a multi-view autostereoscopic 3D display that is in the neighborhood of peers P1 to P5 and that it would thus be convenient to distribute views to peers P1 to P5 such that if P6 requests content X, it can be instructed to fetch the different views that it needs for the different viewing angles from peers P1 to P5 that are in its neighborhood, via the peer interconnections. The distribution of content views in the peer-to-peer network thus needs to be coordinated so that the distribution is well-balanced. This coordination is implemented as a coordinating function in either a centralized form or in a distributed form, or in a hybrid form. When the coordinating function is implemented in a centralized form, the distribution of the content views is ensured by a particular entity, which we will refer to as the coordinating peer (CP). The coordination function can be endorsed by a "normal" peer, e.g. one of the peers P1 to P6, or by a dedicated peer, e.g. peer CP in figure 4, or by a dedicated server. When the coordinating function is implemented in a distributed form, the coordinating function is distributed over the peers in the peer-to-peer network, and all peers of the peer-to-peer network are said to be equipotent. When the coordinating function is implemented in a hybrid form, multiple dedicated peers in the peer-to-peer network implement the coordinating function. In either form, the coordinating function endorses a decisional role. It receives requests from peers (further referred to as 'requesting' peers) for a particular content and a particular number of views and transmits replies to these peers from which peer(s) (further referred to as 'source' peers) they can obtain the desired content. For a particular requested content X and a particular number N of requested monoscopic views M, the coordinating function decides which consecutive monoscopic views M are to be retrieved by a requesting peer from which source peer P. To be able to distribute the different views correctly (i.e. "well-balanced" or "fairly" distributed) over the peers, the coordinating function has knowledge of the network topology in terms of type of peer (n-view autostereoscopic 3D, non-autostereoscopic 3D, or 2D), and in terms of "distance" between peers. Based on this information, it is possible for the coordinating function to distribute content views over the peer-to-peer network such that it is well-balanced, i.e. that the peer that requires the most views of the peers in the peer cluster can quickly receive the content views, that it would need if requested, from its "neighbors" that are only at a short "distance" from it. This "distance" is a metrics that can be based on parameters such as RTT (Round-Trip Time), the number of network hops, average bandwidth measured between two peers, data communication cost, or a combination of these parameters. To illustrate these concepts, a peer A is considered as a "neighbor" of peer B if peer A is at a "distance" from peer "B" that is below a predetermined "distance" threshold, for example, at an RTT of lower than 250ms, at less than 5 network hops, having a minimum average bandwidth of 500kbit/s and/or at a transmission cost of less than 0.01 $/Mbit. The skilled in the art will understand that other parameters than mentioned can come into play for measuring a "distance" between peers. Finally, the management peer knows which content view is/has been distributed to which peer and is still available from that peer. All this information, network topology and distributed content views per peer, are stored in a database that is accessible to the coordinating function. As the coordinating function, this database can be implemented in centralized form, distributed form, or hybrid (partly centralized, partly distributed) form.

**Figure 4** is a diagram illustrating an exchange of messages in the peer-to-peer network of figure 3 with a coordinating function implemented by a centralized coordinating peer. The figure shows the messages that are exchanged between peer P6, peer P1 and a coordinating peer CP. The scenario starts with peer P1 requesting 40 a pair N of monoscopic views M for a content X forming a stereoscopic view V for that content X from the coordinating peer CP. As coordinating peer CP is aware of the network topology, it knows that peer P6 could require a pair of monoscopic views X(M0,M1) that forms a stereoscopic view V1 for viewing angle alpha. As these monoscopic views X(M0) and X(M1) are not yet distributed to any peers in the neighborhood (i.e. in the cluster) of peer P6, it informs peer P1 in a reply 41 that it can fetch 42 a pair of monoscopic views X(M0,M1) forming a stereoscopic view V for the desired content X from a peer Pn. As the other peers P2 to P5 (not shown in this diagram) request views for the same content X, they are also informed by the coordinating peer CP from which peer they can obtain the required views. In a similar manner as for peer P1, the coordinating peer CP thus ensures that the other monoscopic views for the other angles are distributed over neighboring peers P2 to P5, as they request views for content X. Now when peer P6 requests 43 content X, the coordinating peer informs 44 P6 that it can fetch two monoscopic views X(M0,M1) from P1. Arrows 45 and 46 illustrate P6 requesting 45 and P6 receiving 46 the desired views M0 and M1 from P1. Likewise, CP informs 44 P6 that it can fetch the other required monoscopic views for content X from P2 to P5 (peers and exchanges not shown in the figure). The knowledge on the network topology and distributed contents per peer is stored in a database DB that is accessible to coordinating peer CP. To improve search performances for looking up information in the database on either peer or content as a search key, the information stored is implemented in two distinct databases, a first one for network topology and a second one for the list of contents available in the network. In the first database is stored information concerning peer address, cluster to which it belongs, "distance" to other peers in the same cluster, display type (multi-view autostereoscopic 3D with number of views, non-autostereoscopic 3D, 2D, etc), and stored content views per content. In the second database is stored for each content, the number of available views, and for each view, the addresses of the peers proposing it. According to a variant embodiment both databases are merged into one database.

As a new peer requests a particular content and a number of monoscopic views, it provides its characteristics to the coordinating peer, such as its address and display type, in addition to providing information on a reference to a particular content and a number of monoscopic views that it desires. The coordinating peer calculates the distance of the peer to other peers (or according to a variant embodiment it is the requesting peer that calculates the distance to other peers) and based on the distance decides into which cluster the requesting peer can be inserted. Based on the cluster topology, the information provided by the peer in its request and the information stored in the database(s), it decides from which views and from which source peer(s) the requesting peer can obtain the desired content and views. This information is then transmitted to the requesting peer as a response. When the requesting peer has obtained the desired content from the source peer(s) (this may imply passing through other peers, see the interconnections between the peers in the peer cluster according to the figure), the coordinating peer updates the database(s) to add the requesting peer to the cluster and to add the necessary information with regard to the characteristics of the new peer and the content views it has.

If a requesting peer is already known by the coordinating peer, it is not needed that it transfers its characteristics to the coordinating peer other than its address or other identification means, and the coordinating peer can look up other characteristics of the requesting peer in the database(s) (such as cluster, display type, number of required views, etc). Variant embodiments may target the optimization of pertinence of information in the database(s), such as, randomly timed transmission of messages from peers to the coordinating peer informing the coordinating peer of the content and views that the peers can serve to other peers, or regular transmission of update requests from the coordinating peer to the other peers, to update it with any changes to the peer configuration (e.g. modification of type of display) and of the content and views that the peer can serve to other peers. Local storage capabilities such as PVR (Personal Video Recorder) of peers can advantageously be used in the peer-to-peer network to serve received and stored content and views to other peers, and this information can be provided to the coordinating peer as part of the peer characteristics (presence of storage device, free space, stored content and views).

According to a particular embodiment, when the peer-to-peer network is to be constructed for a specific content (i.e. a specific content is not yet well-balanced distributed over the peer-to-peer network), the coordinating peer decides to deploy the content in the network, for example by forcing peers to download specific content and specific views from a server or from other peers when they are available, e.g. in a standby state, or when they have unused resources, i.e. when they are in an available state.

According to a previously mentioned hybrid variant embodiment, the peer-to-peer network is combined with a prior-art broadcasting content distribution network. The peer-to-peer network is used for distribution of high transmission bandwidth requiring content for 3D displays, while 2D content is transferred over the prior-art broadcasting content network. This way, the transmission of content for 3D displays does not impact the bandwidth available for transmission of 2D content, as this may concern the majority of displays. According to a particular embodiment, the display devices of the broadcast network that are also peers in the peer-to-peer network, inform the coordinating peer of the content they receive and store it from the broadcast network, so that they can serve this content as source peers in the peer-to-peer network. Then, the broadcast information should contain additional information when transmitting monoscopic views, such as for example the viewing angle or a view number, so that the coordinator can relate a view transmitted by broadcast to a particular monoscopic view that can be used for distribution in the peer-to-peer network.

According to a particular embodiment of the invention, the coordinating peer regularly performs maintenance and checks the information in its database(s) to verify if the peer-to-peer network is still well-balanced. As the database(s) allows it to perform statistics on received requests, it may decide to deploy content over the peer-to-peer network as a function of its popularity. This includes further spreading the distribution of popular content to peers, either by the above discussed forced download mechanism or on the contrary, to remove content from peers when popularity has decreased. This mechanism can be refined based on recommendation algorithms, which take into account peer habits with regard to content consumption and user profiling to determine which content may be of interest for a peer or on the contrary which content has few chances to be of interest, i.e. the modification of distribution of content is based on popularity of content among users of the peers in the peer cluster. Advantageously, the maintenance operations of the coordinating peer results in the transmission of messages to the peers which are executed by the peers when they are in an available state. Then, while the coordinating peer may contact a peer to download or remove content, the peer may itself decide to execute the operation when it is in a standby state, so that the maintenance operations do not impact the functioning of the peer when it is in the on state. According to a variant embodiment this mechanism is further refined per view, in which case the coordinating peer requests peers to switch view in order to obtain a better balancing of the views in a cluster. Also, the coordinating peer may decide that a peer changes from one cluster to another, which may require the peer to switch from view. The switch can be operated by the peer during a scene cut for example to remain unnoticeable for a viewer. A peer may belong to several clusters.

Two types of peer-to-peer networks may exist. One can recognize rather stable peer-to-peer network, where a majority of stable peers are known to the coordinating peer and the clusters are rather stable. Such a network is for example a network comprising mainly Set Top Boxes, gateways or digital televisions. For this type of network, the optimal distribution policy to obtain a well-balanced content distribution can be optimized based on predictions that are based on the peer habits and peer characteristics. In such a peer-to-peer network, the coordinating peer can for example decide to deploy only 8 of 10 available views for a given content in a cluster because it knows that the maximum number of views that could be requested by a peer in the cluster does not exceed 8 views. One can also recognize instable peer-to-peer networks, of instable peers where new peers come and go continuously. Such a network is for example a mobile telephony network. Then, the coordinating peer can only have a punctual view of the peers in the peer-to-peer network and cannot presume the characteristics of the peers that will request content in the future. In practice, a peer-to-peer network is a mix of stable and unstable peers. When confronted with unstable peers, the coordinating peer therefore considers a worst case where an unknown peer would request the maximum available views for a given content, e.g. 10 according to the previous example. The server would then fairly distribute the 10 available views for popular content over the stable peers in the network.

According to a particular embodiment, when the coordinating peer has a choice between different peers in the cluster of the requesting peer for providing a same content view, the coordinating peer chooses as (a) source peer(s) the peer(s) in the cluster of the requesting peer having the shortest distance to the requesting peer.

According to a variant embodiment, the coordinating peer may instruct a requesting peer to fetch additional views to those it has requested. This is advantageous for load balancing in the peer-to-peer network. In this case, the coordinating peer may indicate in the information that it transmits to the requesting peer which are the view(s) it has requested, and which are the additional view(s) it is required to download. The requesting peer may decide to first download the requested views and then the additional view(s) when it is available.

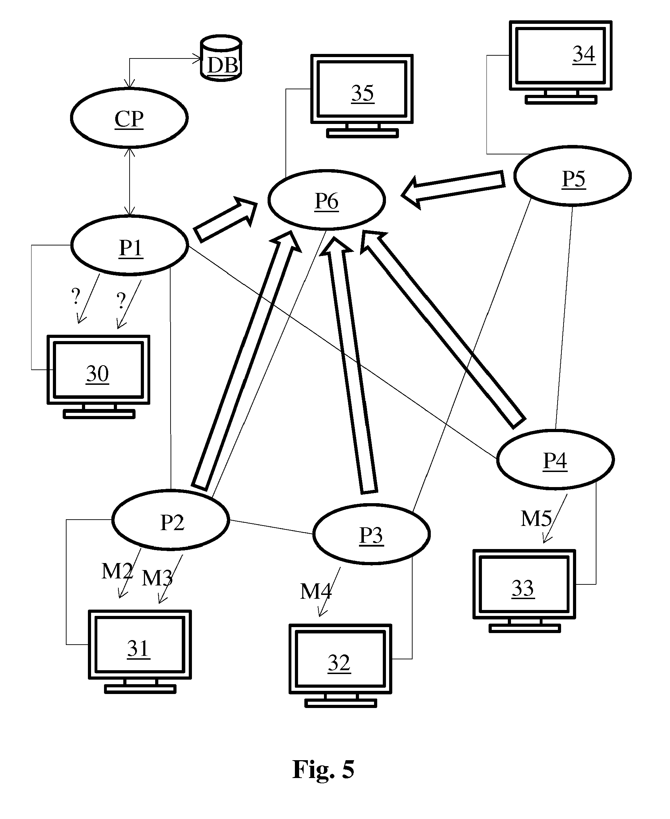

**Figure 5** illustrates the principle of well-balancedness. As has been discussed with regard to figure 3, the notion of well-balancedness, in the context of the invention, is that the peer that requires the most views of the peers in the peer cluster can quickly receive the content views, that it would need if requested, from its "neighbors" that are only at a short "distance" from it. The question is thus, if a peer requires content, to determine which monoscopic view or which consecutive monoscopic views from the set of consecutive monoscopic views that are available for the content, to distribute to the peer so that the well-balancedness is improved in the peer cluster, i.e. that would add to the diversity of monoscopic views that are distributed in the peer cluster, so that, when the "bottleneck" peer, i.e. ideally, the peer that would require the most consecutive monoscopic views in the peer cluster, can be quickly served with the monoscopic views that it would need if it would request the content, from the peers in its neighborhood, i.e. in the peer cluster.

Thus, when the coordinator CP receives a request from a peer P1 for a video content X, it determines from the information in the database DB the peer type of the requesting peer P1 so as to find out the number of consecutive monoscopic views the peer needs. If the peer is of the multi-view autostereoscopic 3D display type, it needs a number, greater than two, of consecutive monoscopic views. If the peer is of the single view autostereoscopic 3D display type or of the non-autostereoscopic 3D display type it needs two consecutive monoscopic views. If the peer is of the 2D display type, it needs one monoscopic view. According to the present example, the requesting peer P1 is of a peer type that needs two consecutive monoscopic views. Then, the coordinating peer determines the peer cluster to which peer P1 belongs, in order to find out which are its neighbor peers. From the neighbor peers in the peer cluster, it determines which is or are the peer(s) that would need the most consecutive monoscopic views if it would request the same content X as is required by peer P1; in the example of figure 5, this is peer P6, that requires 8 consecutive monoscopic views M0 to M7. Then, the coordinating peer determines the monoscopic views for content X that are not available from the peers in the peer cluster, and that would be required by peer P6 if it would request content X. According to our example, peer P2 has views M2 and M3, peer P3 has view M4, and peer P4 has view M5. Thus of the set of 8 monoscopic views for content X that are not available from the peers in the peer cluster (or simply said, that are still "missing"), are monoscopic views M0, M1, M6 and M7. In order to improve the well balancedness of the views in the peer cluster, the coordinating peer thus chooses at least one of these monoscopic views for peer P1, that would contribute to completing the set of views that P6 would require if it would request content X and that are already available in the cluster. According to a variant embodiment the views "provided" to the requesting peer are only views from the set of "missing" views. This is interesting for reduction of that set, but penalizes the requesting peer, as it must fetch all of the views that it needs from outside of the peer cluster, since none of the peers in the peer cluster have those views. According to a variant embodiment, at least one of the views "provided" to the requesting peer is not from the set of "missing" views, so that the requesting peer can fetch the at least one view from its neighbor peers in the peer cluster. If the coordinating peer chooses one monoscopic view, the choices are M0, M1, M6 or M7, and the coordinating peer searches another peer from the information in the database that is outside of the peer cluster to provide the other view that is consecutive to the chosen one. If it chooses two monoscopic views, the choice is limited to the pair (M0,M1) or the pair (M6,M7) since the chosen monoscopic views need be consecutive. The coordinating peer then communicates its choice to the requesting peer by transmitting a list to the requesting peer that indicates the peer(s) from which to fetch which monoscopic view(s).

According to a variant embodiment, the coordinating peer calculates the best option if it has the choice between providing multiple combinations of monoscopic views. This calculation is done by calculating the "cost" of each combination. If according to the example P1 is provided with the first combination (M0,M1), this would mean that if P5 would in turn request content X, it can be provided with the remaining combination (M6,M7). If P1 would be provided with the second combination (M6,M7), then P5 should be provided with combination (M0,M1). Perhaps, from a network cost point of view, i.e. in terms of delay, transmission cost etc, one of the solutions would be less costly than the other. The possible options are increasingly complex when there are not much peers in the peer cluster that have monoscopic views for content X. For example, if peer P2 would not have M2 and M3, a first option would be to provide M0,M1 to peer P1, and M2,M3 to peer P2 and M6, M7 to peer P5; a second option would be to provide M0,M1 to peer P1 and M6,M7 to peer P2, and M2,M3 to peer P5. This would comprise many possible combinations, including intermediate ones e.g. M0,M1 for peer P1, and M1, M2 for peer P2, and M7,M0 for peer P5; any combination would be valid as long as the peers that are of a peer type requiring more than two monoscopic views would be served with consecutive monoscopic views. Therefore, the coordinating peer calculates for each of the possible combinations the lowest overall cost, and selects the combination having the lowest cost, i.e. for each of the monoscopic views for video content X not available from the second peers in the peer cluster and that contribute to completing a set of monoscopic views for video content X for a peer in the peer cluster requiring the most monoscopic views of the second peers in the peer cluster, calculating of the network cost for the peers in the peer cluster to obtain the other monoscopic views for video content X not available from the second peers in the peer cluster and that contribute to completing a set of monoscopic views for video content X for a peer in the peer cluster requiring the most monoscopic views of the peers in the peer cluster.

In principle, autostereoscopic 3D displays do not have more pixels than other types of displays of equivalent size. For an autostereoscopic 3D display with a resolution of WxH, the horizontal resolution per view of such a display is to be divided by the number of monoscopic views that it offers: for example, for an autostereoscopic 3D display offering 8 consecutive monoscopic views in the horizontal plane and based on an LCD panel with a resolution of 1920×1080 (WxH) pixels, the resolution of each of the monoscopic views is 240x1080 pixels (a stereoscopic view with this screen offering a resolution of 480x1080 pixels). This characteristic is advantageously exploited to further reduce the network bandwidth required for transporting video content to 3D displays. Therefore, a low-resolution version of a given view of a content X, available from a peer in the peer cluster can advantageously be used for a 3D display if the resolution is sufficient, that is, if the resolution of the monoscopic view is equal or superior to that of each of the monoscopic views offered by the 3D display. According to a variant embodiment that takes into account this characteristic, the information stored in the database thus additionally comprises for each display (or peer) a video display resolution required for each display (or peer) for monoscopic views. Alternatively, this information is not added to the database, but is calculated by the coordinating peer based on the display type and the number of views. Then, when selecting a monoscopic view for a peer, there are two conditions that are to be satisfied: as a first condition, the monoscopic view has a video resolution that is equal or higher than the display resolution for monoscopic views of the selected peer; and as a second condition, the monoscopic view has a video resolution that is equal or higher than the display resolution for monoscopic views of the peer in the peer cluster that requires the highest number (or most) of monoscopic views, so that the video resolution of the selected monoscopic view is suitable for both peers. According to a variant embodiment that further reduces transmission bandwidth in the distribution network, if there is more than one candidate monoscopic view that is convenient for both devices (i.e. the requesting peer and the peer in the cluster requiring the most monoscopic views; of course, the requesting peer can be the peer that requires the most monoscopic views), the monoscopic views that have a least highest video resolution that is equal or higher than the display resolution of both peers is selected.

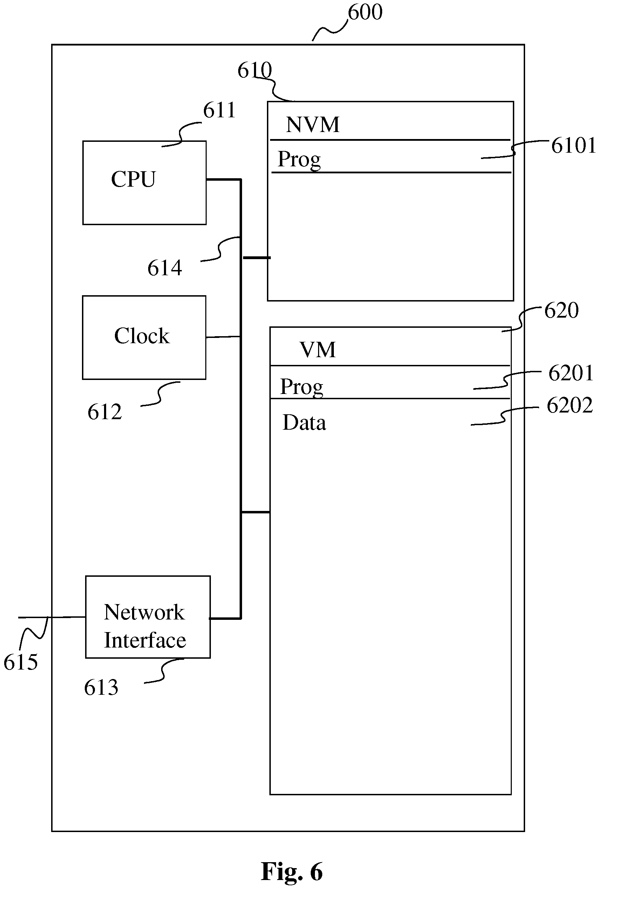

**Figure 6** is an example of a coordinating peer implementing the invention. The device 600 comprises the following components, interconnected by a digital data- and address bus 614:
- a processing unit 611 (or CPU for Central Processing Unit);
- a non-volatile memory NVM 610;
- a volatile memory VM 620 ;
- a clock unit 612, providing a reference clock signal for synchronization of operations between the components of the device 600 and for other timing purposes;
- a network interface 613, for interconnection of device 600 to client devices and other server devices connected in a network via connection 615.

It is noted that the word "register" used in the description of memories 610 and 620 designates in each of the mentioned memories, a low-capacity memory zone capable of storing some binary data, as well as a high-capacity memory zone, capable of storing an executable program, or a whole data set.

Processing unit 611 can be implemented as a microprocessor, a custom chip, a dedicated (micro-) controller, and so on. Non-volatile memory NVM 610 can be implemented in any form of non-volatile memory, such as a hard disk, non-volatile random-access memory, EPROM (Erasable Programmable ROM), and so on. The Non-volatile memory NVM 610 comprises notably a register 6201 that holds a program representing an executable program comprising the method according to the invention. When powered up, the processing unit 611 loads the instructions comprised in NVM register 6101, copies them to VM register 6201, and executes them. The VM memory 620 comprises notably:
- a register 6201 comprising a copy of the program 'prog' of NVM register 6101 ;
- a register 6202 comprising read/write data that is used during the execution of the method of the invention, such as the user profile.

A device such as device 600 is an example of a device that is suited for implementing the method of the invention, and implements the means of the invention.

According to a variant embodiment of the device according to the invention, the device comprises dedicated hardware for implementing the different functions that are provided by the steps of the method.

Other device architectures than illustrated by figure 6 are possible and compatible with the method of the invention. Notably, according to variant embodiments, the invention is implemented as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer, each of the means implemented in hardware, software or a mix of these, in same or different soft- or hardware modules.

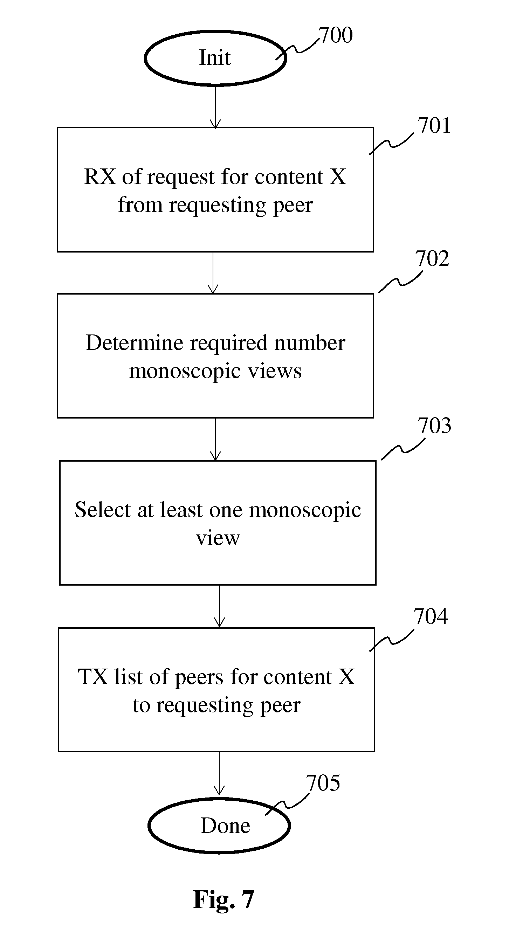

**Figure 7** is a flow chart of a particular embodiment of the method of the invention. The flow chart is for example implemented by a coordinating device such as coordinating peer CP of figure 5, or device 600 of figure 6.

In a first step 700, any variables that are needed for the execution of the method are initialized. In a second step 701, the device receives a request from a first peer (i.e. = the "requesting" peer; e.g. peer P1 of figure 5) for a video content X. In a third step 702, the device determines a number of required consecutive monoscopic views for the first peer according to a display type of said first peer. This information is for example fetched from database DB as depicted in figure 4, or the number of views is part of information that is comprised in the request. The fourth step 703 is a selection step of at least one monoscopic view, where at least the two following selection conditions apply: 1) the at least one selected monoscopic view of monoscopic views for video content X is selected from monoscopic views not available from second peers in a peer cluster, the peer cluster comprising second peers that are within a predetermined distance from the requesting peer; and 2) the at least one selected monoscopic view of monoscopic views for video content X contributes to completing a set of monoscopic views for video content X for a peer in the peer cluster requiring the most monoscopic views of the peers in the peer cluster (e.g. peer P6 in figure 5). Then, as a fifth step 704, the device transmits to the first peer, a list comprising at least one identifier of at least one second peer in the peer cluster for providing at least one of the required number of consecutive monoscopic views to said first peer, wherein at least one monoscopic view of the required number of consecutive monoscopic views is the selected at least one monoscopic view. Finally, the flow chart ends with a step 705.

The flow chart of figure 7 is for illustrative purposes and the method of the invention is not necessarily implemented as such. Other possibilities of implementation comprise parallel execution of steps or batch execution.

## Claims

1. A method for distribution of audiovisual content to video display devices (P1, P2, P3, P4, P5, P6) connected in a network, **characterized in that** said network comprises a peer-to-peer network wherein said video display devices are interconnected as peers, the method being implemented by a coordinating peer (CP), and comprising:
receiving (701) a request from a first peer for video content X;
determining (702) a number of required consecutive monoscopic views for said first peer according to a display type of said first peer;
selecting (703) at least one monoscopic view of monoscopic views for video content X not available from second peers in a peer cluster, said peer cluster comprising second peers that are within a predetermined distance from said first peer, and which at least one monoscopic view contributes to completing a set of monoscopic views for video content X for a peer in said peer cluster requiring the most monoscopic views of the peers in the peer cluster;
transmitting (704), to said first peer, of a list comprising at least one identifier of at least one second peer in said peer cluster for providing at least one of said required number of consecutive monoscopic views to said first peer, wherein at least one monoscopic view of said required number of consecutive monoscopic views is said selected at least one monoscopic view.

2. The method according to claim 1, wherein during a modification of distribution of monoscopic views for video content X in the peer cluster, the peers in the peer cluster that are concerned by the modification, switch from one monoscopic view to another during a scene cut in said video content X.

3. The method according to claim 2, wherein said modification of distribution is based on popularity of video content among users of the peers in the peer cluster.

4. The method according to any of claims 1 to 3, wherein said network comprises a non-peer-to-peer video broadcast distribution network, and the peers inform the coordinating peer of the content and monoscopic views they receive via the non-peer-to-peer video broadcast distribution network.

5. The method according to any of claims 1 to 4, wherein a monoscopic view for a content is associated to a video resolution, and said selected at least one monoscopic view has a video resolution that is equal or higher than a display resolution for monoscopic views required by said first peer and that is equal or higher than a display resolution for monoscopic views required by said peer in said peer cluster requiring the most monoscopic views of the peers in the peer cluster.

6. The method according to claim 5, wherein, if there are multiple monoscopic views with a video resolution that is both equal or higher than a display resolution for monoscopic views required by said first peer and that is equal or higher than a display resolution for monoscopic views required by said peer in said peer cluster requiring the most monoscopic views of the peers in the peer cluster, the monoscopic view with the least highest video resolution is selected in said selecting step.

7. The method according to any of the preceding claims, wherein said selecting step comprises, for each of the monoscopic views for video content X not available from the second peers in the peer cluster and that contributes to completing a set of monoscopic views for video content X for a peer in said peer cluster requiring the most monoscopic views of the peers in the peer cluster, calculating of the network cost for the peers in the peer cluster to obtain the other monoscopic views for video content X not available from the second peers in the peer cluster and that contribute to completing a set of monoscopic views for video content X for a peer in said peer cluster requiring the most monoscopic views of the peers in the peer cluster.

8. The method according to any of the preceding claims, wherein said display type is one of:
a single view 3D display requiring two consecutive monoscopic views, a multi-view autostereoscopic 3D display requiring more than two consecutive monoscopic views, and a 2D display requiring a single monoscopic view.

9. A coordinating device (600, CP) for distribution of video content to video display devices (P1, P2, P3, P4, P5, P6) connected in a network, said network comprises a peer-to-peer network wherein said video display devices are interconnected as peers, the device being **characterized in that** it comprises a network interface (613) and a processing unit (611) for:
receiving a request from a first peer for video content X;
determining a number of required consecutive monoscopic views for said first peer according to a display type of said first peer;
selecting at least one monoscopic view of monoscopic views for video content X not available from second peers in a peer cluster, said peer cluster comprising second peers that are within a predetermined distance from said first peer, and which at least one monoscopic view contributes to completing a set of monoscopic views for video content X for a peer in said peer cluster requiring the most monoscopic views of the peers in the peer cluster;
transmitting, to said first peer, of a list comprising at least one identifier of at least one second peer in said peer cluster for providing at least one of said required number of consecutive monoscopic views to said first peer, wherein at least one monoscopic view of said required number of consecutive monoscopic views is said selected at least one monoscopic view.

10. The device according to claim 9, wherein the device further comprises a network interface and a processing unit for modifying a distribution of monoscopic views for a video content in a peer cluster, whereby during a modification of distribution of monoscopic views for video content X in the peer cluster, the peers in the peer cluster that are concerned by the modification, switch from one monoscopic view to another during a scene cut in said video content X.

11. The device according to claim 10, wherein the device further comprises a processing unit for determining a popularity of video content among users of peers, and for basing said modifying of a distribution on popularity of video content among users of the peers in the peer cluster.

12. The device according to any of claims 9 to 11, wherein said device comprises a network interface and a processing unit for receiving of information from peers that are also connected in a non-peer-to-peer video broadcast distribution network, the peers informing the coordinating peer of the content and monoscopic views they receive via the non-peer-to-peer video broadcast distribution network.
